Europäisches Patentamt

European Patent Office

Office européen des brevets

(19)

(11) Veröffentlichungsnummer: **0 180 718 B1**

(12) **EUROPÄISCHE PATENTSCHRIFT**

(45) Veröffentlichungstag der Patentschrift: **18.09.91**

(21) Anmeldenummer: **85109033.2**

(22) Anmeldetag: **19.07.85**

(51) Int. Cl.⁵: **G11B 21/10**, G11B 5/592, G11B 5/588, G11B 5/584, G11B 5/58

(54) **Anordnung zur Einregelung der Spurlage bei der Wiedergabe magnetisch aufgezeichneter frequenzmodulierter Signale.**

(30) Priorität: **08.11.84 DE 3440779**

(43) Veröffentlichungstag der Anmeldung:
**14.05.86 Patentblatt 86/20**

(45) Bekanntmachung des Hinweises auf die Patenterteilung:
**18.09.91 Patentblatt 91/38**

(84) Benannte Vertragsstaaten:
**DE FR GB IT**

(56) Entgegenhaltungen:
**EP-A- 0 010 664**
**EP-A- 0 018 646**
**DE-C- 2 711 970**

**PATENT ABSTRACTS OF JAPAN, unexamined applications, Field P, Vol. 5, Nr. 175, 11. November 1981 THE PATENT OFFICE JAPANESE GOVERNMENT Seite 116 P 88**

**PATENT ABSTRACTS OF JAPAN, unexamined applications, Field P, Vol. 6, Nr. 237, 25. November 1982 THE PATENT OFFICE JAPA-NESE GOVERNMENT Seite 4 P 157**

(73) Patentinhaber: **GRUNDIG E.M.V. Elektro-Mechanische Versuchsanstalt Max Grundig holländ. Stiftung & Co. KG.**
**Kurgartenstrasse 37**
**W-8510 Fürth/Bay.(DE)**

(72) Erfinder: **Opelt, Christian**
**Tannenstrasse 16**
**W-8501 Veitsbronn(DE)**

**Beschreibung**

Die Erfindung betrifft eine Anordnung zur Einregelung der Spurlage bei der Wiedergabe magnetisch aufgezeichneter frequenzmodulierter Videosignale mit den im Oberbegriff des Anspruchs 1 angegebenen Merkmalen, wie sie aus der englischen Übersetzung der Zusammenfassung der japanischen Patentanmeldung 56-105 324 bekannt ist.

Bei der Wiedergabe magnetisch aufgezeichneter Signale tritt das Problem auf, die Videoköpfe bei allen Betriebsarten (Normalwiedergabe, Zeitlupe, Zeitraffer, Standbild, ...) möglichst genau auf den vorgesehenen Spuren zu führen, um Störungen im wiedergegebenen Bild zu vermeiden bzw. möglichst gering zu halten. Es sind hierzu bereits Anordnungen bekannt, welche Piezoelemente verwenden, die an ihrem einen Ende fest in einer rotierenden Halterung eingespannt und an ihrem anderen auslenkbaren Ende mit den Videoköpfen verbunden sind. Beim Anlegen eines Steuersignals werden die Piezoelemente in die eine oder in die andere Richtung ausgelenkt, so daß die Videoköpfe senkrecht zur Abtastrichtung bewegt werden können.

Aus der EP-A-0 018 646 ist eine Positioniereinrichtung für einen Magnetkopf eines Magnetbandgerätes bekannt. Diese Positioniereinrichtung, mittels der der Magnetkopf mit ausreichender Genauigkeit in eine Ausgangsstellung, z.B. eine erste Aufzeichnungsspur, gebracht werden soll, weist u.a. eine Gewindespindel auf, welche über einen Mitnehmer und eine Blattfeder mit dem Kopfträger verbunden ist. Der Kopfträger weist zur Signalisierung seiner Position einen Signalgeber auf, dessen Ausgangssignal ausgewertet und zur Steuerung eines für den Anrieb des Kopfträgers vorgesehenen Schrittmotors verwendet wird. Weiterhin weist die bekannte Einrichtung zur exakten Ausrichtung des Magnetkopfes auf die Spur eine Auswertestufe auf, in der zwei aufeinanderfolgende Lesespannungswerte einem Differenzverstärker zugeführt werden. Das Ausgangssignal des Differenzverstärkers wird zur Steuerung der Drehrichtung des Schrittmotors verwendet. Ist nach dem vorstehenden Steuermechanismus das Spurmaximum erreicht, stellt sich ein Pendeln um das Spurmaximum ein.

Aus der EP-A-0 010 664 ist ein Verfahren zur Positionierung eines Magnetkopfes bei der Wiedergabe aufgezeichneter Daten bekannt, bei welchem aus den wiedergegebenen Daten ein Spurfehlersignal abgeleitet wird, welches wiederum zur Spurregelung verwendet wird.

Hierzu wird das wiedergegebene Datensignal abgetastet und aufeinanderfolgende Abtastwerte zur Ermittlung eines Amplitudenmaximums ausgewertet. Zur Ermittlung des Spurfehlersignals wird dabei jeweils ein aktueller Abtastwert mit dem zuletzt ermittelten maximalen Amplitudenwert verglichen. Auch bei diesem Verfahren stellt sich eine pendelnde Bewegung des Magnetkopfes um die Spurmitte ein.

In der DE-PS 27 11 970 werden zwei Schaltungen vorgestellt, mit deren Hilfe die Lage eines Magnetkopfes relativ zu der gewünschten Spur gemessen und ein Steuersignal erzeugt wird, das Auskunft über die Abweichung des Magnetkopfes von der Sollspur gibt. Dieses Steuersignal wird an das Piezoelement angelegt, so daß der am Piezoelement befestigte Magnetkopf der aufgezeichneten Spur folgt.

Die erste dieser beiden bekannten Schaltungen (siehe Figur 10a der DE-PS 27 11 970) verwendet eine sogenannte "Zittertechnik". Dabei ist ein Oszillator vorgesehen, der ein Zittersignal fester Frequenz liefert, welches an das Piezoelement gekoppelt wird, um dieses zum Vibrieren zu bringen. Diese Vibrationen verursachen eine Amplitudenmodulation der Hüllkurve des wiedergegebenen Signals. Die Ermittlung der Größe der Amplitudenänderungen der Hüllkurve liefert Informationen über die Abweichung des Kopfes von der Sollspur. Diese Informationen werden mit Hilfe eines Hüllkurvendetektors gewonnen. Das Ausgangssignal des Hüllkurvendetektors ist zum Phasen- und Amplitudenvergleich mit dem Zittersignal des Oszillators an einen Eingang eines Synchrondetektors gelegt. Das Ausgangssignal des Synchrondetektors, das ein Maß über die Abweichung des Kopfes von der Sollspur darstellt und auch die Richtung der Abweichung charakterisiert, wird zur Bildung eines Kontrollsignals herangezogen, welches nach Überlagerung mit dem Zittersignal des Oszillators die Piezoelemente im Sinne einer Einregelung der Spurlage ansteuert.

Die zweite dieser beiden bekannten Schaltungen (siehe Figur 10b der DE-PS 27 11 970) verwendet eine sogenannte "Spurfolgetechnik". Dabei sind zwei Spurlageabtastköpfe vorgesehen, deren Ausgangssignale einem Differenzdetektor zum Vergleich der mittleren Amplituden der Hüllkurven der von den Spurlageabtastköpfen wiedergegebenen Signale zugeführt werden. Das Ausgangssignal des Differenzdetektors ist ein Maß für die Abweichung des Kopfes von der Sollspur und wird zur Erzeugung des Steuersignals herangezogen. Das Steuersignal wird an das Piezoelement zur Steuerung der Spurlage des Magnetkopfes angelegt.

Ferner ist es bekannt, bei der Aufzeichnung neben dem Luminanz- und dem Chrominanzsignal jeder Videospur eine Hilfsfrequenz zuzuteilen und diese mit aufzuzeichnen. Das Prinzip dieser sogenannten DTF-Regelung besteht. nun darin, daß beim Lesen der Videospuren der Videokopf die auf den Nachbarspuren aufgezeichneten Hilfsfrequenzen erfaßt und im Sinne einer Einregelung der Spurlage auswertet.

Demgegenüber liegt der vorliegenden Erfindung die Aufgabe zugrunde, eine Anordnung zu schaffen, mit deren Hilfe ohne die Notwendigkeit eines Zittersignaloszillators, von Spurlageabtastköpfen und von aufgezeichneten Hilfsfrequenzen eine störzonenfreie Wiedergabe magnetisch aufgezeichneter Signale ermöglicht wird. Dabei soll es ohne Belang sein, auf welche Art und Weise die Regelung der Spurlage bei der Aufzeichnung der Signale durchgeführt wurde.

Diese Aufgabe wird durch die im kennzeichnenden Teil des Anspruchs 1 angegebenen Maßnahmen gelöst. Vorteilhafte Weiterbildungen der Erfindung ergeben sich aus den Ansprüchen 2 bis 7.

Die Vorteile der Erfindung liegen insbesondere darin, daß die Anordnung nach der vorliegenden Erfindung universell einsetzbar ist, d.h. unabhängig davon arbeitet, wie die Spurregelung beim Aufzeichnungsvorgang durchgeführt wurde, daß die Anordnung ferner einfach aufgebaut ist und preisgünstig realisiert werden kann.

Weitere vorteilhafte Eigenschaften der Anordnung nach der vorliegenden Erfindung ergeben sich aus einem Ausführungsbeispiel, das im folgenden mit Hilfe der Figuren 1 bis 3 erläutert wird. Es zeigt;

Fig. 1    ein Blockschaltbild einer Anordnung nach der vorliegenden Erfindung für normalen Wiedergabebetrieb,

Fig. 2    ein Beispiel für eine Ausgestaltung der Schaltung 5 zur Steuersignalerzeugung von Figur 1 und

Fig. 3    ein Blockschaltbild eines Teils einer Anordnung nach der vorliegenden Erfindung für die sogenannten "Feature-Funktionen" (Standbild, Zeitlupe, Zeitraffer,

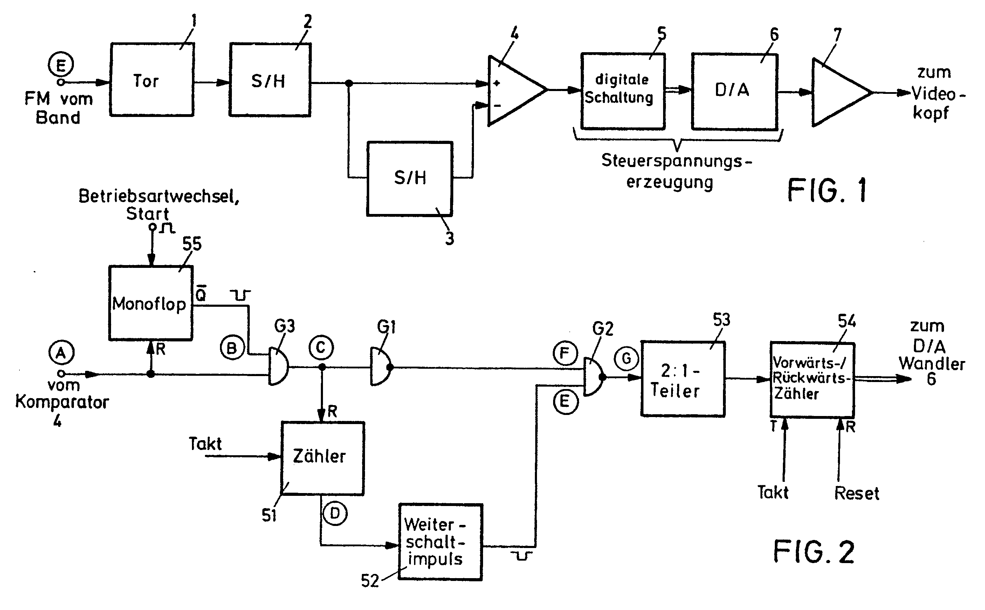

Die Figur 1 zeigt ein Blockschaltbild einer Anordnung nach der vorliegenden Erfindung für Wiedergabebetrieb mit Normalgeschwindigkeit. Dem Eingang E dieser Anordnung wird ein aus den Schrägspuren eines Magnetbandes wiedergegebenes FM-Signal zugeführt. Mit Hilfe der Schaltung 1, die beispielsweise ein Zeit- und/oder Frequenztor enthält, wird die Amplitude des wiedergegebenen FM-Signals bei den den Zeilenimpulsen zugeordneten Frequenzen extrahiert.Diese Amplitude wird im Abtasthalteglied 2 abgespeichert. Ein weiteres Abtasthalteglied 3 übernimmt den im Abtasthalteglied 2 abgespeicherten Wert, kurz bevor der nächste Amplitudenwert an das erste Abtasthalteglied 2 gegeben wird. Im Komparator 4 findet somit ein Vergleich aufeinanderfolgender Amplituden statt.

Befindet sich der von der Einrichtung 5, 6 ununterbrochen angesteuerte Magnetkopf gerade auf dem Weg zur Spurmitte hin, so ist der am positiven Eingang des Komparators 4 anliegende (unverzögerte) Amplitudenwert größer als der am negativen Eingang des Komparators 4 anliegende (verzögerte) Amplitudenwert. Am Ausgang des Komparators 4 liegt in diesem Fall ein Signal hohen Pegels.

Entfernt sich der von der Einrichtung 5, 6 ununterbrochen angesteuerte Magnetkopf gerade von der Spurmitte, so ist der am positiven Eingang des Komparators 4 anliegende (unverzögerte) Amplitudenwert kleiner als der am negativen Eingang des Komparators 4 anliegende (verzögerte) Amplitudenwert. Am Ausgang des Komparators 4 liegt in diesem Fall ein Signal niedrigen Pegels.

Das Ausgangssignal des Komparators 4 gelangt an eine digitale Schaltung 5, mit deren Hilfe ein Ansteuersignal für den (die) Videokopf (Videoköpfe) gewonnen wird. Dieses Ansteuersignal wird in einem D/A-Wandler 6 digital/analog gewandelt und über eine Endstufe 7 dem (den) Videokopf (-köpfen) bzw. dessen (deren) Piezoelement(e) im Sinne einer Einregelung der Spurlage zugeführt.

Der Komparator 4 ist vorzugsweise so ausgebildet, daß er erst dann ein Ausgangssignal hohen Pegels erzeugt, wenn die Differenz der beiden Komparator-Eingangssignale größer ist als ein vorgegebener Wert. Auf diese Weise können beim Wiedergabevorgang auftretende zufällige Amplitudenschwankungen (beispielsweise durch die variierende Band-Kopf-Entfernung verursacht) die Einregelung der Spurlage nicht negativ beeinflussen.

Durch die Verwendung der Amplituden des frequenzmodulierten Wiedergabesignals bei den den Zeilenimpulsen zugeordneten Frequenzen als Kriterium für die Abweichung der Köpfe von der Spur erhält man eine vom Bildinhalt unabhängige Information zur Einregelung der Spurlage.

Die Figur 2 zeigt ein Beispiel für eine Ausgestaltung der Schaltung 5 zur Steuersignalerzeugung. Dem Eingang (A) dieser Schaltung wird das Ausgangssignal des Komparators 4 (siehe Fig. 1) zugeführt. Dieses Signal gelangt an einen Eingang eines UND-Gatters G3 und an den Rücksetz-Eingang R eines Monoflops 55 mit der Kippzeit $T_K$. Dem Monoflop 55 wird weiterhin beim Start oder bei einem Wechsel der Wiedergabebetriebsart, beispielsweise beim Umschalten von Wiedergabe mit Normalgeschwindigkeit auf schnellen Vorlauf, ein Startimpuls zugeführt. Das Ausgangssignal $\bar{Q}$ des Monoflops 55, das nur nach dem Start oder einem Wechsel der Betriebsart in Ansprache auf den Startimpuls für die Dauer der Kippzeit $T_K$ des Monoflops negativ ist, liegt am zweiten Eingang (Punkt (B)) des UND-Gatters G3 an.

Das Ausgangssignal (Punkt (C)) des UND-Gatters G3 gelangt einerseits über eine Negationsstufe G1 an einen Eingang (Punkt (F)) des NAND-Gatters G2 und andererseits an einen Rücksetz-Eingang R eines Zählers 51, der über ein an seinem Takteingang anliegendes Taktsignal hochgezählt wird. Der Ausgang (Punkt (D)) des Zählers 51 ist an eine Einrichtung 52 zur Erzeugung eines Weiterschaltimpulses angeschlossen, deren Ausgangssignal an den zweiten Eingang (Punkt (E)) des NAND-Gatters G2 geführt ist.

Das Ausgangssignal des NAND-Gatters G2 gelangt an den Eingang (Punkt (G)) eines 2:1-Teilers 53, der immer dann seinen Zustand ändert, wenn sein Eingangssignal negative Flanken aufweist.

Das Ausgangssignal des 2:1-Teilers 53 ist an den Vorwärts-/Rückwärts-Steuereingang V/R des Vorwärts-/Rückwärts-Zählers 54 angeschlossen. Der Vorwärts-/Rückwärts-Zähler 54 hat ferner einen Takteingang T und einen Rücksetz-Eingang R. Das Ausgangssignal des Zählers 54 wird dem in Fig. 1 gezeigten D/A-Wandler 6 zur Digital-Analog-Wandlung zugeführt. Das Ausgangssignal des D/A-Wandlers 6 wird über eine Endstufe 7 zur Einregelung der Spurlage an das zum jeweiligen Videokopf gehörige Piezoelement geführt.

Im folgenden wird die Funktionsweise der Schaltung nach Figur 2 näher erläutert:
Bewegt sich der Videokopf während des Wiedergabebetriebes gerade zur Spurmitte der Sollspur hin, dann liegt am Ausgang des Komparators 4 und damit am Punkt (A) eine positive Spannung. Das Ausgangssignal $\overline{Q}$ (Punkt (B)) des Monoflops 55 ist ebenfalls positiv. Folglich wird das UND-Gatter G3 durchlässig und es liegt am Punkt (C) ein Signal hohen Pegels an.

Das Ausgangssignal des Zählers 51 (Punkt (D)) hat solange einen niedrigen Pegel, bis der Zähler 51 auf einen vorgebbaren Wert hochgezählt wurde, beispielsweise auf seine halbe Zählkapazität.

Die an den Zähler 51 angeschlossene Schaltung 52 ist so ausgelegt, daß sie nur dann kurzzeitig ein Ausgangssignal niedrigen Pegels (sog. "Weiterschaltimpuls") erzeugt, wenn der Zähler 51 seine halbe Zählkapazität erreicht.

Durch den hohen Pegel am Rücksetz-Eingang R wird ein Hochzählen des Zählers 51 verhindert.

Da am Eingang (F) des NAND-Gatters G2 ein Signal niedrigen Pegels anliegt, weist das Ausgangssignal des NAND-Gatters G2 einen hohen Pegel auf. Dies bewirkt eine Beibehaltung des Zustandes des Teilers 53, der nur auf negative Flanken anspricht, und demzufolge auch eine Beibehaltung der Zählrichtung des Vorwärts-/Rückwärts-Zählers 54, von dessen Ausgangssignal nach Digital-Analog-Wandlung das jeweilige Piezoelement ausgelenkt wird.

Nach kurzer Zeit wird der Videokopf die Spurmitte der Sollspur überschreiten und sich von der Spurmitte der Sollspur wegbewegen. Demzufolge nimmt das Ausgangssignal des Komparators 4 einen niedrigen Pegel an. Folglich ist das UND-Gatter G3 undurchlässig und es liegt am Punkt (C) ein Signal niedrigen Pegels an. Dieses Signal niedrigen Pegels wird in der Negationsstufe G1 invertiert, so daß an einem Eingang (Punkt (F)) des NAND-Gatters G2 ein Signal hohen Pegels entsteht.

Der Zähler 51 beginnt zu zählen, erreicht aber anfänglich den vorgegebenen Wert (halbe Zählkapazität) nicht. Folglich behält das Ausgangssignal der Schaltung 52 einen hohen Pegel.

Aufgrund der hohen Pegel an seinen beiden Eingängen (E) und (F) entsteht im Ausgangssignal (Punkt (G)) des NAND-Gatters G2 ein Übergang von einem hohen auf einen niedrigen Pegel, also eine abfallende Flanke. Durch diese abfallende Flanke wird der Zustand des 2:1-Teilers 53 geändert. Diese Zustandsänderung wird am Vorwärts-/Rückwärts-Steuereingang V/R des Zählers 54 registriert und bewirkt eine Änderung der Zählrichtung des Zählers 54. Folglich wird das Piezoelement bzw. der daran befestigte Videokopf in die andere Richtung ausgelenkt, sich also wiederum in Richtung Spurmitte der Sollspur bewegen.

Der Ausgang des Komparators 4 wird erneut einen positiven Wert annehmen. Der Zustand des 2:1-Teilers 53 wird dabei nicht beeinflußt, da am Punkt (C) ein Signal hohen und am Punkt (F) ein Signal niedrigen Pegels anliegt. Durch den hohen Pegel am Punkt (C) wird der Zähler 51 zurückgesetzt. Nach einiger Zeit überschreitet der Videokopf abermals die Spurmitte der Sollspur, usw.

Der vom Ausgangssignal des Vorwärts-/Rückwärts-Zählers 54 ununterbrochen angesteuerte Videokopf pendelt also immer um die Spurmitte der Sollspur.

Im folgenden wird der Fall betrachtet, daß das Gerät eingeschaltet wird oder ein Wechsel der Betriebsart vorliegt.

Unmittelbar nach dem Einschalten des Geräts oder einem Wechsel der Betriebsart wird der Videokopf vom Ausgangssignal des Vorwärts-/Rückwärts-Zählers 54 ausgelenkt. Die Richtung der Auslenkung (entweder auf die Spurmitte zu oder von der Spurmitte weg) ist dabei rein zufällig bzw. hängt von der zuletzt eingestellten Zählrichtung des Vorwärts-/Rückwärts-Zählers 54 ab. Im folgenden wird erläutert, wie die vorliegende Schaltung auf die beiden genannten Fälle reagiert.

Läuft der Videokopf unmittelbar nach dem Einschalten bzw. dem Betriebsartwechsel auf die Spurmitte der Sollspur zu, so liegt am Ausgang des Komparators 4 und damit auch am Punkt (A) und am Rücksetz-Eingang R des Monoflops 55 ein Signal hohen Pegels an. Durch den Startimpuls liegt am Eingang (B) des UND-Gatters G3 ein Signal niedrigen Pegels, was zur Folge hat, daß das Gatter G3 sperrt. Somit hat das Signal am Punkt (C) einen niedrigen und das Signal am Punkt (F) einen hohen Pegel. Der Zähler 51 beginnt zu zählen. Nach einer Zeit, die von der jeweiligen Startbedingung (Entfernung des Kopfes von der Spurmitte der Sollspur) und von der Taktfrequenz $f_1$ des Vorwärts-/Rückwärts-Zählers 54 abhängt, überschreitet der Videokopf die Spurmitte der Sollspur und bewegt sich danach von der Spurmitte der Sollspur weg. Folglich liefert der Komparator 4 ein Ausgangssignal niedrigen Pegels. Das Signal am Punkt (C) behält seinen niedrigen Pegel. Der Zähler 51 zählt solange weiter, bis er seine halbe Zählkapazität erreicht. Dadurch angeregt, liefert die Schaltung 52 den genannten Weiterschaltimpuls, dessen Rückflanke im Zusammenwirken mit dem hohen Pegel am Punkt (F) eine abfallende Flanke im Ausgangssignal des NAND-Gatters G2 erzeugt. Diese wiederum ändert den Zustand des Teilers 53 und damit die Zählrichtung des Vorwärts-/Rückwärts-Zählers 54, so daß sich der Videokopf wieder zur Spurmitte der Sollspur bewegt. Anschließend wird der Videokopf - wie oben beschrieben - auf die Spurmitte der Sollspur eingeregelt.

Läuft dagegen der Videokopf unmittelbar nach dem Einschalten bzw. dem Betriebsartwechsel von der Spurmitte weg, so würde der Videokopf auf die Nachbarspur laufen und dort eingeregelt werden. Dies wird mit Hilfe der vorliegenden Schaltung verhindert, wie im folgenden gezeigt wird:

Liegt unmittelbar nach dem Einschalt- bzw. Umschaltvorgang der Ausgang des Komparators 4 auf einem niedrigen Pegel, dann hat auch das Ausgangssignal des Gatters G3 am Punkt (C) einen niedrigen Pegel. Dieses Signal gelangt invertiert an einen Eingang (Punkt F) des NAND-Gatters G2. Der Zähler 51 beginnt in Abhängigkeit vom anliegenden Taktsignal zu zählen. Nach einer Zeit, die von der jeweiligen Startbedingung (Entfernung des Kopfes von der Spurmitte der Sollspur) und von der Taktfrequenz $f_1$ des Vorwärts-/Rückwärtszählers 54 abhängt, erreicht der Videokopf die Nachbarspur und bewegt sich in Richtung Spurmitte der Nachbarspur. Folglich liegt am Ausgang des Komparators 4 und somit auch am Punkt (A) ein Signal hohen Pegels. Das hätte zur Folge, daß sich der Kopf auf die Spurmitte der Nachbarspur einregeln würde. Dies wird mit Hilfe der vorliegenden Schaltung verhindert. Denn das Signal hohen Pegels am Punkt (A) kann das UND-Gatter G3 nicht passieren, da der vom Startimpuls angeregte Monoflop 55 noch nicht in seinen ursprünglichen Zustand zurückgekippt ist, d.h. am Ausgang $\overline{Q}$ bzw. Punkt (B) ein Signal niedrigen Pegels anliegt. Folglich bleibt auch am Punkt (C) ein Signal niedrigen Pegels erhalten. Dies wiederum bewirkt, daß der Zähler 51 weiterzählt, bis er seine halbe Zählkapazität erreicht. Beim Erreichen seiner halben Zählkapazität erzeugt der Zähler 51 ein Ausgangssignal hohen Pegels (am Punkt (D)), das der Schaltung 52 zugeführt wird. Die Schaltung 52 erzeugt in diesem Fall den bereits obengenannten Weiterschaltimpuls, dessen Rückflanke in Zusammenwirken mit dem hohen Pegel am Punkt (F) im Ausgangssignal des NAND-Gatters G2 einen Übergang von einem hohen auf einen niedrigen Pegel auslöst. Durch diese abfallende Flanke im Ausgangssignal des NAND-Gatters G2 wird der Zustand des Teilers 53 und damit auch die Zählrichtung des Zählers 54 geändert. Dies wiederum bewirkt eine Rückkehr des Kopfes auf die Sollspur und die oben beschriebene Einregelung des Kopfes auf die Spurmitte der Sollspur.

Voraussetzung für das Funktionieren der beschriebenen Schaltung ist lediglich eine geeignete Wahl der Kippzeit $T_K$ des Monoflops 55, der Taktfrequenz $f_1$ des Vorwärts-/Rückwärts-Zählers 54 und der Taktfrequenz $f_2$ des Zählers 51. Die Taktfrequenz $f_2$ für den Zähler 51 muß so gewählt werden, daß der Zähler 51 den vorgegebenen Zählwert (z.B. seine halbe Zählkapazität) innerhalb der Kippzeit $T_K$ des Monoflops 55 erreicht. Die Taktfrequenz $f_1$ für den Vorwärts-/Rückwärts-Zähler 54 muß so gewählt werden, daß der jeweilige Videokopf innerhalb der Zeit, die der Zähler 51 benötigt, um seine halbe Zählkapazität zu erreichen, nicht die Spurmitte der Nachbarspur überschreiten kann. Diese Bedingung ist erfüllt, wenn die Zeit, die der Zähler 51 benötigt, um seine halbe Zählkapazität zu erreichen, kleiner ist als die Zeit, die der Kopf benötigt, um von der Spurmitte einer Spur zum Spurübergang zur Nachbarspur zu laufen.

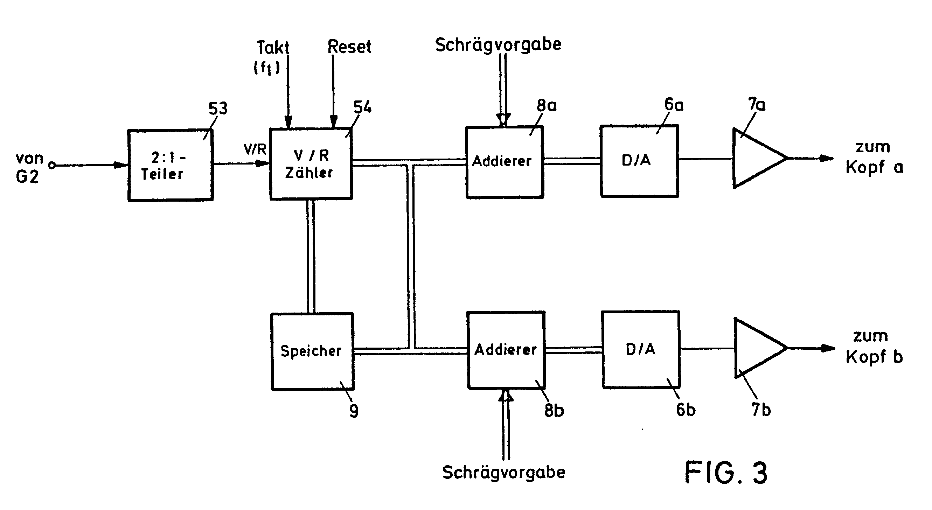

Die Figur 3 zeigt ein Blockschaltbild eines Teiles einer Anordnung nach der vorliegenden Erfindung, die für sogenannte "Feature-Funktionen" (Standbild, Zeitlupe, Zeitraffer, ...) geeignet ist. Die Schaltung nach Figur 3 enthält zwischen dem Zähler 54 und den D/A-Wandlern 6a und 6b Addierer 8a und 8b. In diesen Addierern 8a und 8b wird zu den Regelsignalen des Zählers 54 eine von einem Mikrocomputer erzeugte sogenannte "Schrägvorgabe" addiert, die nötig ist, wenn eine Betriebsart mit von der Normalgeschwindigkeit abweichender Wiedergabegeschwindigkeit gewählt wird. Eine derartige Schrägvorgabe ist bereits grundsätzlich bekannt (beispielsweise aus "GRUNDIG Technische Informationen", 3/81, Seiten 115, 116 und 158) und braucht deshalb nicht näher erläutert werden. Ferner hat die Schaltung nach Figur 3 einen 2×8-Bit-Speicher 9, in dem die Anfangswerte der vorhergehenden Spur des betreffenden Kopfes nach dem Einschwingen abgespeichert werden. Dieser Wert wird als Anfangsstützwert für die neue Spur des betreffenden Kopfes verwendet.

Die vorgegebene Erfindung ist nicht auf das angegebene Ausführungsbeispiel beschränkt. Sie ist grundsätzlich anwendbar bei allen Wiedergabesystemen, bei denen frequenzmodulierte, magnetisch aufgezeichnete Signale aus den Spuren eines Aufzeichnungsträgers ausgelesen werden, unabhängig davon, auf welche Art und Weise die Spurregelung bei der Aufzeichnung durchgeführt wurde.

Vorteilhafte Weiterbildungen der Erfindung bestehen darin, nur jede n-te Amplitude (n ≥ 1) des frequenzmodulierten Wiedergabesignals bei den den Zeilenimpulsen zugeordneten Frequenzen zur Erfassung der Abweichung der Wiedergabeköpfe von der Sollspur heranzuziehen (z.B.: n = 8 oder n = 16). Ebenso ist es möglich, n Amplituden zu mitteln und mit dem Mittelwert von m darauffolgenden Amplituden zu vergleichen. Ferner kann dem positiven Eingang des Komparators 4 der jeweils aktuelle Amplitudenwert und dem negativen Eingang des Komparators der Mittelwert von n vorausgehenden Amplituden zugeführt werden.

**Patentansprüche**

1. Anordnung zur Einregelung der Spurlage bei der Wiedergabe magnetisch aufgezeichneter frequenzmodulierter Signale, bei der die Videoköpfe in Abhängigkeit von einer Steuerspannung senkrecht zur Spurrichtung bewegt werden können, wobei vorgesehen sind:
   - eine erste Einrichtung (1, 2, 3, 4), die zur Ermittlung der Abweichung der Videoköpfe von der Sollspur Amplituden des frequenzmodulierten Wiedergabesignals ausschließlich bei den den Zeilenimpulsen zugeordneten Frequenzen miteinander vergleicht,

   eine zweite steuerbare Einrichtung (5, 6), die in Ansprache auf das Ausgangssignal (A) der ersten Einrichtung (1, 2, 3, 4) die Steuerspannung erzeugt,
   **dadurch gekennzeichnet, daß**
   - die erste Einrichtung (1, 2, 3, 4) aufeinanderfolgende Amplituden des wiedergegebenen Signals miteinander vergleicht,
   - das Ausgangssignal (A) der ersten Einrichtung (1, 2, 3, 4) Signalübergänge aufweist, die das Überschreiten der Spurmitte kennzeichnen, und
   - die zweite, steuerbare Einrichtung (5, 6) einen Vorwärts-/Rückwärts-Zähler (54) enthält, dessen Zählrichtung bei jedem Signalübergang des Ausgangssignals (A) der ersten Einrichtung (1, 2, 3, 4) umschaltbar (53) ist, so daß die Steuerspannung eine ununterbrochene Bewegung der Videoköpfe senkrecht zur Sollspur derart bewirkt, daß die Videoköpfe ständig um die Spurmitte der Sollspur pendeln.

2. Anordnung nach Anspruch 1,
   **dadurch gekennzeichnet, daß**
   die Einrichtung zur Erfassung der Abweichung der Videoköpfe von der Sollspur folgende Schaltmittel enthält:
   - ein Tor (1), das für diejenigen Signalanteile durchlässig ist, die den den Zeilenimpulsen zugeordneten Frequenzen entsprechen;
   - Speicher (2, 3), in denen aufeinanderfolgende Amplituden des Wiedergabesignals bei den den Zeilenimpulsen zugeordneten Frequenzen abgespeichert werden und
   - einen Komparator (4), der die abgespeicherten Amplituden miteinander vergleicht.

3. Anordnung nach einem oder mehreren der Ansprüche 1 bis 2,
   **dadurch gekennzeichnet, daß**
   die Einrichtung zur Erzeugung der Steuerspannung Schaltmittel (G1, G2, G3, 51, 53, 55) enthält, die unmittelbar nach dem Start oder einer Änderung der Wiedergabebetriebsart eine Einregelung des jeweiligen Wiedergabekopfes auf eine der Sollspur benachbarte Spur verhindern.

4. Anordnung nach Anspruch 3,
   **dadurch gekennzeichnet, daß**
   die Schaltmittel (G1, G2, G3, 51, 52, 53, 55) immer dann, wenn der Wiedergabekopf nach einer vorgegebenen Zeit nach dem Start oder einer Änderung der Wiedergabebetriebsart die Spurmitte der Sollspur nicht erreicht hat, eine Änderung der Bewegungsrichtung des Kopfes auslösen.

5. Anordnung nach einem oder mehreren der Ansprüche 1 bis 4,
   **dadurch gekennzeichnet, daß**
   zur Erfassung der Abweichung der Videoköpfe von der Sollspur nur jede n-te Amplitude verwendet wird.

6. Anordnung nach einem oder mehreren der Ansprüche 1 bis 4,
   **dadurch gekennzeichnet, daß**
   zur Erfassung der Abweichung der Videoköpfe von der Sollspur die Mittelwerte aufeinanderfolgender Amplituden verglichen werden.

7. Anordnung nach einem oder mehreren der Ansprüche 1 bis 4,
**dadurch gekennzeichnet,** daß
zur Erfassung der Abweichung der Videoköpfe von der Sollspur der jeweils aktuelle Amplitudenwert mit dem Mittelwert vorausgehender Amplituden verglichen wird.

**Claims**

1. Arrangement for correcting the track position during the reproduction of magnetically recorded frequency-modulated signals, in which the video heads can be moved perpendicularly to the track direction in dependence on a control voltage, there being provided:
   - a first device (1, 2, 3, 4) which, for the purpose of determining the deviation of the video heads from the nominal track, compares amplitudes of the frequency-modulated replay signal with one another exclusively at the frequencies allocated to the line pulses,
   - a second controllable device (5, 6), which generates the control voltage in response to the output signal (A) of the first device (1, 2, 3, 4), characterised in that
   - the first device (1, 2, 3, 4) compares successive amplitudes of the reproduced signal with one another,
   - the output signal (A) of the first device (1, 2, 3, 4) exhibits signal transitions which identify the passing of the track centre, and
   - the second controllable device (5, 6) contains an up/down counter (54), the counting direction of which can be switched over (53) with each signal transition of the output signal (A) of the first device (1, 2, 3, 4), in such a manner that the control voltage effects an uninterrupted movement of the video heads perpendicularly to the nominal track in such a manner that the video heads continuously oscillate around the track centre of the nominal track.

2. Arrangement according to Claim 1, characterised in that the device for detecting the deviation of the video heads from the nominal track contains the following switching means:
   - a gate (1) which is transparent to those signal components which correspond to the frequencies allocated to the line pulses;
   - stores (2, 3) in which successive amplitudes of the replay signal at the frequencies allocated to the line pulses are stored, and
   - a comparator (4) which compares the stored amplitudes with one another.

3. Arrangement according to one or more of Claims 1 to 2, characterised in that the device for generating the control voltage contains switching means (G1, G2, G3, 51, 53, 55) which prevent a correction of the respective replay head to a track adjacent to the nominal track immediately after the start of or a change in the replay mode.

4. Arrangement according to Claim 3, characterised in that the switching means (G1, G2, G3, 51, 52, 53, 55) trigger a change in the direction of movement of the head whenever the replay head has not reached the track centre of the nominal track after a predetermined time after the start of or a change in the replay mode.

5. Arrangement according to one or more of Claims 1 to 4, characterised in that only every nth amplitude is used for detecting the deviation of the video heads from the nominal track.

6. Arrangement according to one or more of Claims 1 to 4, characterised in that the centre values of successive amplitudes are compared for detecting the deviation of the video heads from the nominal track.

7. Arrangement according to one or more of Claims 1 to 4, characterised in that the current amplitude value in each case is compared with the centre value of preceding amplitudes for detecting the deviation of the video heads from the nominal track.

**Revendications**

1. Dispositif pour régler la position de la piste lors de la reproduction de signaux enregistrés magnétiquement et modulés en fréquence, et dans lequel les têtes vidéo peuvent être déplacées par une tension de commande, perpendiculairement à la direction de la piste, et dans lequel il est prévu:
   - un premier dispositif (1,2,3,4), qui, pour la détermination de l'écart des têtes vidéo par rapport à la piste de consigne, compare entre elles des amplitudes du signal de reproduction modulé en fréquence, exclusivement pour les fréquences associées aux impulsions de ligne,
   - un second dispositif commandable (5,6), qui produit la tension de commande, en réponse au signal de sortie (A) du premier dispositif (1,2,3,4),

caractérisé en ce que

- le premier dispositif (1,2,3,4) compare entre elles des amplitudes successives du signal reproduit,
- le signal de sortie (A) du premier dispositif (1,2,3,4) présente des transitions qui caractérisent le dépassement du centre de la piste, et
- le second dispositif commandable (5,6) contient un compteur progressif/régressif (54), dont le sens de comptage peut être commuté (53) lors de chaque transition du signal de sortie (A) du premier dispositif (1,2,3,4) de sorte que la tension de commande provoque un déplacement ininterrompu des têtes vidéo perpendiculairement à la piste de consigne de telle sorte que les têtes vidéo oscillent en permanence autour du centre de la piste de consigne.

2. Dispositif selon la revendication 1, caractérisé en ce que le dispositif servant à détecter l'écart des têtes vidéo par rapport à la piste de consigne contient les moyens de commutation suivants:
   - une porte (1), qui est passante pour les composantes du signal, qui correspondent aux fréquences associées aux impulsions de lignes,
   - des mémoires (2,3), dans lesquelles sont mémorisées des amplitudes successives du signal de reproduction, pour les fréquences associées aux impulsions de lignes, et
   - un comparateur (4), qui compare entre elles les amplitudes mémorisées.

3. Dispositif selon une ou plusieurs des revendications 1 à 2, caractérisé en ce que le dispositif servant à produire la tension de commande contient des moyens de commutation (G1,G2,G3,51,53,55), qui, aussitôt après le démarrage ou une modification du type de fonctionnement de reproduction, empêchent un réglage de la tête respective de reproduction sur une piste voisine de la piste de consigne.

4. Dispositif selon la revendication 3, caractérisé en ce que les moyens de commutation (G1,G2,G3,51,52, 53,55) déclenchent une modification du sens de déplacement de la tête chaque fois que la tête de reproduction n'a pas atteint le centre de la piste de consigne au bout d'un intervalle de temps prédéterminé après le démarrage ou une modification du type de reproduction.

5. Dispositif selon une ou plusieurs des revendications 1 à 4, caractérisé en ce que pour la détermination de l'écart des têtes vidéo par rapport à la piste de consigne, on utilise seulement chaque n-ième amplitude.

6. Dispositif selon une ou plusieurs des revendications 1 à 4, caractérisé en ce que, pour la détermination de l'écart des têtes vidéo par rapport à la piste de consigne, on compare les valeurs moyennes d'amplitudes successives.

7. Dispositif selon une ou plusieurs des revendications 1 à 4, caractérisé en ce que, pour la détermination de l'écart de têtes vidéo par rapport à la piste de consigne, on compare la valeur actuelle respective de l'amplitude à la valeur moyenne d'amplitudes précédentes.

FIG. 1

FIG. 2

EP 0 180 718 B1

EP 0 180 718 B1

Takt
(f₁)   Reset        Schrägvorgabe

von
G2 ○———→ | 2:1 -
Teiler | 53 —V/R→ | V / R
Zähler | 54 ——→ | Addierer | 8a ——→ | D/A | 6a ——→ ▷ 7a ——→ zum
Kopf a

| Speicher | 9 ——→ | Addierer | 8b ——→ | D/A | 6b ——→ ▷ 7b ——→ zum
Kopf b

Schrägvorgabe

FIG. 3